# EUROPÄISCHE PATENTSCHRIFT

(11) **EP 1 012 651 B1**
(45) Veröffentlichungstag und Bekanntmachung des Hinweises auf die Patenterteilung: **28.11.2001**
(21) Anmeldenummer: 97921606.6
(22) Anmeldetag: 27.03.1997
(51) Int. Cl.: G02B 6/44, G02B 6/38

(54) **VERZWEIGUNGSANORDNUNG FÜR EIN VIELADRIGES LICHTWELLENLEITERKABEL**
BRANCHING DEVICE FOR A MULTICORE OPTICAL WAVEGUIDE CABLE
SYSTEME DE RAMIFICATION POUR UN CABLE DE GUIDE D'ONDE LUMINEUSE MULTICONDUCTEUR

(30) Priorität: 29.03.1996 DE 19613733
(43) Veröffentlichungstag der Anmeldung: 28.06.2000
(73) Patentinhaber: Infineon Technologies AG, 81669 München (DE)
(72) Erfinder: BEIER, Axel, D-13158 Berlin (DE)
(74) Vertreter: Zedlitz, Peter, Dipl.-Inf.
(86) Internationale Anmeldenummer: DE9700694
(87) Internationale Veröffentlichungsnummer: WO9737262

(56) Entgegenhaltungen:
- EP-A- 0 408 852
- EP-A- 0 512 811
- DE-A- 4 341 481
- DE-C- 4 302 826
- US-A- 4 298 415
- US-A- 4 626 067
- PATENT ABSTRACTS OF JAPAN vol. 096, no. 009, 30.September 1996 & JP 08 122538 A (SUMITOMO ELECTRIC IND LTD;NIPPON TELEGR & TELEPH CORP <NTT>)

## Beschreibung

Die Erfindung liegt auf dem Gebiet der Präparation von Enden vieladriger Lichtwellenleiterkabel und betrifft eine Verzweigungsanordnung für ein vieladriges Lichtwellenleiterkabel umfassend mehrere Lichtwellenleiter-Aufnahmehüllen und einen Verzweigungskörper, in den das vieladrige Lichtwellenleiterkabel eintritt und aus dem die Lichtwellenleiter-Aufnahmehüllen austreten, wobei die Lichtwellenleiter-Aufnahmehüllen jeweils nur einen einzigen Lichtwellenleiter des Lichtwellenleiterkabels aufnehmen.

Aus der DE 43 41 481 A1 ist eine Verzweigungsanordnung bekannt, die einen als Verzweigungskörper dienenden Schrumpfschlauch umfaßt. In das eine Ende des Schrumpfschlauches tritt ein vieladriges Lichtwellenleiterkabel ein, das unter Freigabe der Enden seiner Zugentlastungsmittel von einem den Adern gemeinsamen Kabelmantel endseitig befreit ist. Die Adern verzweigen paarweise in Einzelmäntel oder Aufnahmehüllen mit jeweils einer individuellen Zugentlastung. Die Aufnahmehüllen treten am anderen Ende des Verzweigungskörpers aus. Um eine sichere Übertragung der Zugbelastungen über den Verzweigungsbereich zu gewährleisten, ist in den Schrumpfschlauch ein aushärtendes oder aushärtbares Vergußmittel eingebracht, in das die jeweiligen Zugentlastungsenden eingebettet sind. Das Lichtwellenleiterpaar eines Einzelmantels tritt aus dem freien Ende des Einzelmantels aus und endet in einem gemeinsamen Steckverbinder, z. B. einem sog. ESCON-Duplex-Stecker.

Für paarweise in einer gemeinsamen Aufnahmehülle verlaufende und von einem gemeinsamen Doppelstecker aufgenommene und abgeschlossene Adern eines vieladrigen Lichtwellenleiterkabels hat sich diese Konstruktion in der Praxis bewährt.

In bestimmten Anwendungsfällen setzen sich im Hinblick auf die erreichbare Flexibilität und eine erhöhte Montage- und Servicefreundlichkeit zunehmend Doppelsteckerkonstruktionen durch, bei denen zwei Einzelstecker (z. B. SC-Stecker) mit Hilfe eines gemeinsamen Halters einen Doppelstecker (sog. SC-Duplex-Stecker) bilden. Ein derartiger Doppelstecker ist z.B. aus der DE 43 02 826 C1 bekannt. Bei Verwendung eines solchen Doppelsteckers zum (teilweisen) Anschluß eines vieladrigen Kabels könnten die aus dem Verzweigungskörper separat austretenden individuellen Aufnahmehüllen grundsätzlich jeweils einen einzigen Lichtwellenleiter bis zu dem jeweiligen Einzelstecker führen. Mit zunehmender freier Länge der individuellen Aufnahmehüllen besteht jedoch die Gefahr, daß sich die vergleichsweise biegeschlaffen Hüllen verdrillen und/oder mit benachbarten Aufnahmehüllen oder Gegenständen verheddern, wobei der in ihnen verlaufende Lichtwellenleiter beschädigt werden kann.

Aus der US-PS 4,626,067 geht eine Verzweigungsanordnung der eingangs genannten Art hervor, die umfaßt einen Verzweigungskörper umfaßt, in dessen eines Ende ein vieladriges Lichtwellenleiterkabel eintritt. Der Verzweigungskörper ist eine zylindrische Muffe, die an ihrem anderen Ende mit individuellen Aufnahmehülsen versehen sein kann. In den Aufnahmehülsen enden individuelle Lichtwellenleiter-Aufnahmehüllen, die jeweils einen Lichtwellenleiter aufnehmen. Die aus den Aufnahmehülsen austretenden Lichtwellenleiter verlaufen frei und individuell bis zu einem jeweils am Lichtwellenleiterende angeordneten Einzelstecker.

Die Aufgabe der vorliegenden Erfindung besteht in der Schaffung einer Verzweigungsanordnung für ein vieladriges Lichtwellenleiterkabel, die es gestattet, daß einzelne, endseitig mit Einzelsteckern versehene Lichtwellenleiter individuell zu annähernd demselben Ort verlaufen, ohne einer erhöhten Beschädigungsgefahr ausgesetzt zu sein.

Diese Aufgabe wird bei einer Verzweigungsanordnung der eingangs genannten Art erfindungsgemäß dadurch gelöst, daß mindestens zwei dieser Aufnahmehüllen bis zu einem Trennpunkt jenseits des Verzweigungskörpers miteinander derart verbunden sind, daß sie bis zu dem Trennpunkt längsparallel und biegsam verlaufen.

Ein wesentlicher Vorteil der Erfindung besteht darin, daß die beiden längsparallel verlaufenden Aufnahmehüllen zwischen dem Verzweigungskörper und dem Trennpunkt eine weitestgehend zwischenraumfreie Einheit bilden, die gegen das Eindringen und/ oder Verhaken fremder Gegenstände unempfindlich ist. Dies wird vorzugsweise durch eine unmittelbare Verbindung der Aufnahmehüllenmäntel oder durch ein Verbindungsmaterial zwischen den längsparallelen, einander zugewandten Mantelflächen erreicht. Die Hüllen können auch von einem gemeinsamen Mantel gebildet oder umgeben sein, der einen Querschnitt in Form einer liegenden Acht aufweist. Die erfindungsgemäße Verzweigungsanordnung ermöglicht in besonders vorteilhafter Weise, daß Aufnahmehüllen mehrere Meter paarweise verlaufen können und dabei - gegenüber einem vergleichsweise steifen vieladrigen Lichtwellenleiterkabel - den Vorteil einer höheren Biegsamkeit und einer leichteren Verlegbarkeit aufweisen, gegen äußere Beschädigungen aber weitestgehend unempfindlich sind. Die erfindungsgemäße Verzweigungsanordnung ermöglicht damit eine sehr übersichtliche und servicefreundliche endseitige Konfektionierung von vieladrigen Lichtwellenleiterkabeln und ist insbesondere für die Verwendung bei SC-Duplex-Steckerkonstruktionen z. B. gemäß der DE 43 02 826 C1 geeignet.

Eine fertigungstechnisch bevorzugte Ausgestaltung der erfindungsgemäßen Verzweigungsanordnung sieht vor, daß die verbundenen Aufnahmehüllen von dem Endbereich aus zur Verlagerung des Trennpunktes zum Verzweigungskörper hin durch radiale zugkräfte trennbar sind.

Um beim Auftreten radialer Zugkräfte ein weiteres Trennen der Aufnahmehüllen als bis zum beabsichtigten Trennpunkt zuverlässig zu verhindern, ist die Trennstelle vorteilhafterweise durch einen aufgeschrumpften Schlauch gesichert.

Ein Ausführungsbeispiel der Erfindung wird nachfolgend anhand einer Zeichnung näher erläutert; es zeigen:
Figur 1 eine erfindungsgemäße Verzweigungsanordnung und
Figur 2 in stark vergrößerter Darstellung einen Schnitt entlang der Linie II-II in Figur 1.

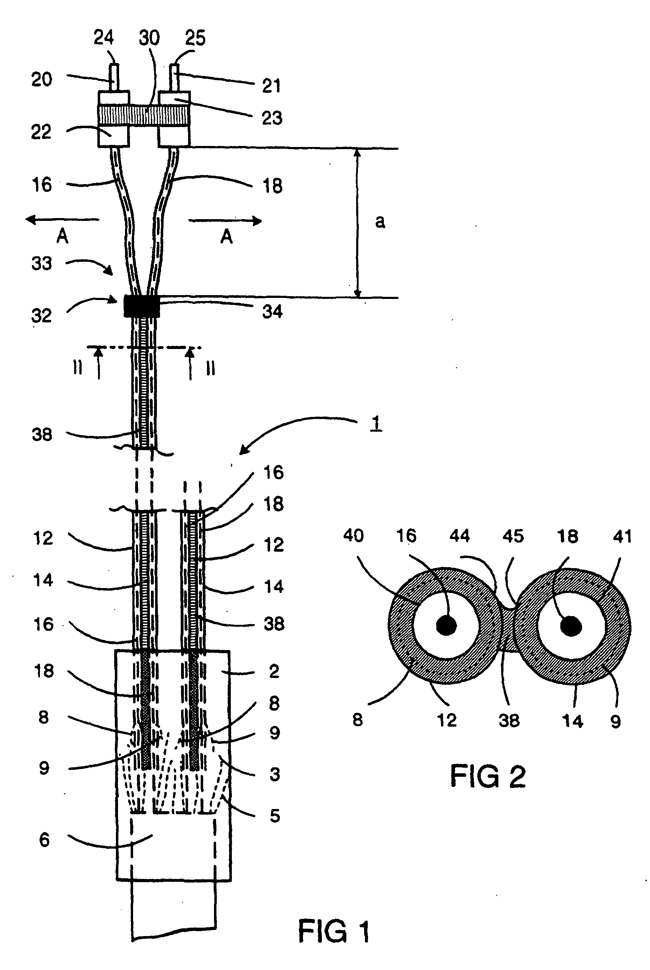

Die Verzweigungsanordnung 1 umfaßt einen Verzweigungskörper 2, der beispielsweise in an sich aus der DE 43 41 481 A1 bekannten Weise aus einem mit einer Vergußmasse 3 gefüllten Schrumpf schlauch bestehen kann. In die Vergußmasse 3 sind die freien Enden einer Zugentlastung 5 eines mehradrigen Lichtwellenleiterkabels 6 sowie die Enden von Zugentlastungen 8, 9 von jeweils zwei paarweise verbundenen Aufnahmehüllen 12, 14 (auch als "Fan-Out-Tubing" bezeichnet) eingebettet. Zur übersichtlicheren Darstellung zeigt Figur 1 nur zwei Paare abgehender Aufnahmehüllen 12, 14, die aus dem Verzweigungskörper 2 austreten. Grundsätzlich kann selbstverständlich eine wesentliche höhere Anzahl einzelner Aufnahmehullen aus dem Verzweigungskörper austreten. In den Aufnahmehüllen 12, 14 ist jeweils individuell ein Lichtwellenleiter 16, 18 geführt. Das Ende jedes Lichtwellenleiters 16, 18 ist in an sich bekannter Weise zentrisch von einem Steckerstift 20, 21 eines sog. SC-Steckers 22, 23 aufgenommen und schließt mit seiner Stirnfläche mit der Stirnseite 24, 25 seines Steckerstiftes 20, 21 ab. Dadurch ist eine optische Kopplung der Lichtwellenleiter 16, 18 mit nicht dargestellten Kopplungspartnern ermöglicht. Die beiden SC-Stecker 22, 23 sind von einem gemeinsamen Halter 30 aufgenommen und bilden damit einen sog. SC-Duplex-Stecker.

Ein vergleichsweise kurzer Abschnitt a von beispielsweise 30 cm besteht zwischen den SC-Steckern 22, 23 und einer Trennstelle 32 im Endbereich 33 der Aufnahmehüllen, die von einem aufgeschrumpften Schrumpfschlauch 34 umgeben ist. Zwischen der Trennstelle 32 und dem Verzweigungskörper 2 verlaufen die Aufnahmehüllen 12, 14 längsparallel und sind an ihren einander zugewandten Mantelseiten verbunden. Dazu kann das Mantelmaterial z. B. durch Anschmelzen unmittelbar verbunden sein. Die Hüllenmäntel können vorteilhafterweise bereits verbunden erzeugt werden, beispielsweise indem sie aus einem geeigneten Kunststoffmaterial durch Extrusion hergestellt werden und eine im Querschnitt einer liegenden Acht entsprechende Ausgestaltung aufweisen. Die Verbindung 38 zwischen den Aufnahmehüllen ist dabei so ausgelegt, daß beim Auftreten radialer Zugkräfte - wie durch die Pfeile A angedeutet - eine Trennung der Hüllen 12, 14 ermöglicht ist. Dies vereinfacht insbesondere die Montage vor Ort erheblich, wobei eine weitergehende Trennung über den Trennpunkt 32 in Richtung auf den Verzweigungskörper 2 hinaus durch den Schrumpfschlauch 34 verhindert ist.

Figur 2 zeigt in detaillierter und vergrößerter Darstellung einen Querschnitt entlang der Linie II-II in Figur 1 und die im Innern jeweils eines Röhrchens 40, 41 mit einem Durchmesser von ca. 1,2mm verlaufenden Lichtwellenleiteradern 16, 18. Die Röhrchen 40, 41 bestehen aus einem flexiblen Material(z.B. PTFE), das bei der Montage der Anordnung ein einfaches Einfädeln der Lichtwellenleiter 16, 18 auch über mehrere Meter Länge gestattet. Weiterhin ist die faserförmige Zugentlastung (z. B. Aramid-Fasern) 8, 9 erkennbar. Zwischen den einander zugewandten Mantelflächen 44, 45 der Hüllen 12, 14 ist die Verbindung 38 erkennbar.

## Patentansprüche

1. Verzweigungsanordnung für ein vieladriges Lichtwellenleiterkabel umfassend:
- mehrere Lichtwellenleiter-Aufnahmehüllen (12,14) und
- einen Verzweigungskörper (2), in den das vieladrige Lichtwellenleiterkabel (6) eintritt und aus dem die Lichtwellenleiter-Aufnahmehüllen (12,14) austreten,
- wobei die Lichtwellenleiter-Aufnahmehüllen (12,14) jeweils nur einen einzigen Lichtwellenleiter (16,18) des Lichtwellenleiterkabels (6) aufnehmen,
**dadurch gekennzeichnet, daß**
- mindestens zwei dieser Aufnahmehüllen (12,14) bis zu einem Trennpunkt (32) jenseits des Verzweigungskörpers (2) miteinander derart verbunden sind, daß sie bis zu dem Trennpunkt längsparallel und biegsam verlaufen.

2. Verzweigungsanordnung nach Anspruch 1,
**dadurch gekennzeichnet, daß**
die verbundenen Aufnahmehüllen (12,14) von dem Endbereich (33) aus zur Verlagerung des Trennpunktes (32) zum Verzweigungskörper (2) hin durch radiale Zugkräfte trennbar sind.

3. Verzweigungsanordnung nach Anspruch 1 oder 2,
**dadurch gekennzeichnet, daß**
die Trennstelle (32) durch einen aufgeschrumpften Schlauch (34) gesichert ist.

## Claims

1. Junction arrangement for a multicore optical-fibre cable comprising:
- a plurality of optical-waveguide receiving sheaths (12, 14) and
- a junction element (2), into which the multicore optical-fibre cable (6) enters and from which the optical-waveguide receiving sheaths (12, 14) emerge,
- in which the optical-waveguide receiving sheaths (12, 14) receive in each case only one individual optical waveguide (16, 18) of the optical-fibre cable (6),
**characterized in that**
- at least two of these receiving sheaths (12, 14) are connected to one another as far as a separation point (32) beyond the junction element (2), in such a manner that they extend as far as the separation point longitudinally parallel and in a flexible fashion.

2. Junction arrangement according to Claim 1,
**characterized in that** the connected receiving sheaths (12, 14) can be separated by radial tensile forces from the end region (33) for shifting the separation point (32) towards the junction element (2).

3. Junction arrangement according to Claim 1 or 2, **characterized in that** the separation point (32) is protected by a shrink-fitted tube.

## Revendications

1. Dispositif de ramification d'un câble de guides d'ondes lumineuses multibrin comprenant :
- plusieurs gaines (12, 14) de réception de guide d'ondes lumineuses et
- une pièce (2) de ramification, dans laquelle le câble (6) de guides d'ondes lumineuses multibrin entre et dont sortent les gaines (12, 14) de réception de guides d'ondes lumineuses,
- les gaines (12, 14) de réception de guides d'ondes lumineuses ne recevant respectivement qu'un seul guide (16, 18) d'ondes lumineuses du câble (6) de guides d'ondes lumineuses,
**caractérisé en ce que**
- au moins deux de ces gaines (12, 14) de réception sont reliées entre elles jusqu'à un point (32) de séparation au-delà de la pièce (2) de ramification, de façon à ce qu'elles s'étendent en étant parallèles et souples jusqu'au point de séparation.

2. Dispositif de ramification suivant la revendication 1,
**caractérisé en ce que** les gaines (12, 14) de réception qui sont reliées peuvent être séparées par des forces radiales de traction de la partie (33) d'extrémité en vue de déplacer le point (32) de séparation vers la pièce (2) de ramification.

3. Dispositif de ramification suivant la revendication 1 ou 2,
**caractérisé en ce que** la zone (32) de séparation est bloquée par un tuyau (34) souple rétreint.
